# EUROPEAN PATENT APPLICATION

(11) **EP 4 764 950 A1**
(43) Date of publication of application: **24.06.2026**
(21) Application number: 25203068.9
(22) Date of filing: 18.09.2025
(51) Int. Cl.: G06N 3/045, G06F 40/216, G06F 40/30

(54) **ELECTRONIC DEVICE FOR AUGMENTING POSITION INFORMATION OF TOKEN AND OPERATING METHOD THEREOF**

(30) Priority: 23.12.2024 KR 20240194542
(71) Applicant: Samsung Electronics Co., Ltd., Suwon-si, Gyeonggi-do 16677 (KR)
(72) Inventor: SHIN, Seungjun, 16678 Suwon-si (KR); OH, Jaehoon, 16678 Suwon-si (KR); JANG, Dongwon, 16678 Suwon-si (KR); HAN, Dasol, 16678 Suwon-si (KR)
(74) Representative: Marks & Clerk LLP

(57) **Abstract**

There is provided an electronic device and an operating method of the electronic device. The method includes generating a plurality of pieces of augmented position information for a first token input to a large language model (LLM) by augmenting position information of the first token, generating a plurality of queries for the first token based on the plurality of pieces of augmented position information, determining a plurality of first attention scores based on the plurality of queries, determining a first target attention score based on the plurality of first attention scores, and performing inference on the input based on the first target attention score.

## Description

### FIELD

Methods and apparatuses consistent with embodiments relate to an electronic device for augmenting position information of a token and an operating method thereof.

### BACKGROUND

A large language model (LLM) is a deep learning-based model trained with extremely large-scale data. The LLM is specialized for understanding and generating text data. Recently, the LLM has revolutionized the field of natural language processing and is one of the core technologies that enable a computer to understand and process human language. According to an example, the LLM may include a generative pre-trained transformer (GPT) and bidirectional encoder representations from transformers (BERT).

### summary

One or more embodiments may address at least the above problems and/or disadvantages and other disadvantages not described above. Also, the embodiments are not required to overcome the disadvantages described above, and an embodiment may not overcome any of the problems described above.

According to an aspect of the disclosure, there is provided an operating method of an electronic device, the operating method including: generating a plurality of pieces of augmented position information for a first token input to a language model (LM) by augmenting position information of the first token; generating a plurality of queries for the first token based on the plurality of pieces of augmented position information; determining a plurality of first attention scores based on the plurality of queries; determining a first target attention score based on the plurality of first attention scores; and performing inference on the input based on the first target attention score.

Each piece of augmented position information from the plurality of pieces of augmented position information may be generated based on at least one of a plurality of first functions configured to augment the position information of the first token.

The operating method may further include: generating a plurality of keys for a second token input to the LM by augmenting position information of the second token, and the second token may be configured to perform an attention operation with the first token.

The determining of the plurality of first attention scores may include determining a first attention score, among the plurality of first attention scores, based on a pair of a first query and a first key, among the plurality of queries and the plurality of keys, the first query and the first key including position information that is augmented by a same first function.

The determining of the first target attention score may include determining the first target attention score based on one of a plurality of second functions that determines the first target attention score from the plurality of first attention scores.

The operating method may further include determining a plurality of second attention scores based on the plurality of queries and a key of a second token; and determining a second target attention score based on the plurality of second attention scores.

The determining of the second target attention score may include determining the second target attention score based on one of a plurality of third functions that determines the second target attention score from the plurality of second attention scores.

The operating method may further include removing, from a memory, a value and the key of the second token based on the second target attention score having an attention score that is less than or equal to a threshold value.

The LM may include a multi-head attention layer, and the generating of the plurality of pieces of augmented position information for the first token, the generating of the plurality of queries, the determining of the plurality of first attention scores, and the determining of the first target attention score may be performed for each head of the multi-head attention layer.

According to another aspect of the disclosure, there is provided an operating method of an electronic device, the operating method including: inputting tokens to a language model (LM) including a plurality of transformer blocks; and generating, by the LM, an output corresponding to the tokens through inference by using the tokens as inputs, wherein at least one of the plurality of transformer blocks is configured to: generate a plurality of pieces of augmented position information by augmenting position information of the tokens, generate a plurality of queries and a plurality of keys for the tokens based on the plurality of pieces of augmented position information, and perform inference corresponding to the tokens based on a target attention score determined from the plurality of queries and the plurality of keys.

The plurality of transformer blocks may include a first transformer block and a second transformer block, and the first transformer block and the second transformer block may be configured to augment the position information by different functions.

According to another aspect of the disclosure, there is provided an electronic device including: a memory configured to store instructions; and at least one processor configured to execute the instructions, wherein, the instructions, when individually or collectively executed by the at least one processor, cause the electronic device to: generate a plurality of pieces of augmented position information for the first token input to a language model (LM) by augmenting position information of the first token; generate a plurality of queries for the first token based on the plurality of pieces of augmented position information; determine a plurality of first attention scores based on the plurality of queries; determine a first target attention score based on the plurality of first attention scores; and perform inference on the input based on the first target attention score.

The instructions, when individually or collectively executed by the at least one processor, may cause the electronic device to generate each one of the plurality of pieces of augmented position information from the position information based on at least one of a plurality of first functions configured to augment the position information of the first token.

The instructions, when individually or collectively executed by the at least one processor, may cause the electronic device to, generate a plurality of keys for a second token input to the LM by augmenting position information of the second token, and the second token may be configured to perform an attention operation with the first token.

The instructions, when individually or collectively executed by the at least one processor, cause the electronic device to determine a first attention score, among the plurality of first attention scores, based on a pair of a first query and a first key, among the plurality of queries and the plurality of keys, the first query and the first key including position information that is augmented by a same first function.

The instructions, when individually or collectively executed by the at least one processor, may cause the electronic device to determine the first target attention score based on one of a plurality of second functions that determines the first target attention score from the plurality of first attention scores.

The instructions, when individually or collectively executed by the at least one processor, may cause the electronic device to: determine a plurality of second attention scores based on the plurality of queries and a key of a second token; and determine a second target attention score based on the plurality of second attention scores.

The instructions, when individually or collectively executed by the at least one processor, may cause the electronic device to determine the second target attention score based on one of a plurality of third functions that determines the second target attention score from the plurality of second attention scores.

The instructions, when individually or collectively executed by the at least one processor, may cause the electronic device to remove, from a memory, a value and the key of the second token based on the second target attention score having an attention score that is less than or equal to a threshold value.

The LM may include a multi-head attention layer, and the instructions, when individually or collectively executed by the at least one processor, may cause the electronic device to, for each head of the multi-head attention layer, generate the plurality of pieces of augmented position information for the first token, generate the plurality of queries, determine the plurality of first attention scores, and determine the first target attention score.

### brief description of drawings

The above and/or other aspects will be more apparent by describing certain embodiments, taken in conjunction with the accompanying drawings, in which:
FIG. 1 is a diagram illustrating an electronic device according to an embodiment;
FIG. 2 is a diagram illustrating an architecture of a large language model (LLM), according to an embodiment;
FIG. 3 is a diagram illustrating an attention calculation according to related art;
FIG. 4 is a diagram illustrating an attention calculation through augmentation of position information, according to an embodiment;
FIG. 5 is a diagram illustrating deletion of a key-value (KV) cache using augmentation of position information, according to an embodiment;
FIG. 6 is a diagram illustrating an LLM that performs augmentation on position information in some transformer blocks, according to an embodiment; and
FIG. 7 is a flowchart illustrating an operating method of an electronic device, according to an embodiment.

### detailed description

The following detailed structural or functional description is provided as an example only and various alterations and modifications may be made to the embodiments. Here, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments will be described in detail with reference to the accompanying drawings. When describing the embodiments with reference to the accompanying drawings, like reference numerals refer to like elements and a repeated description related thereto will be omitted.

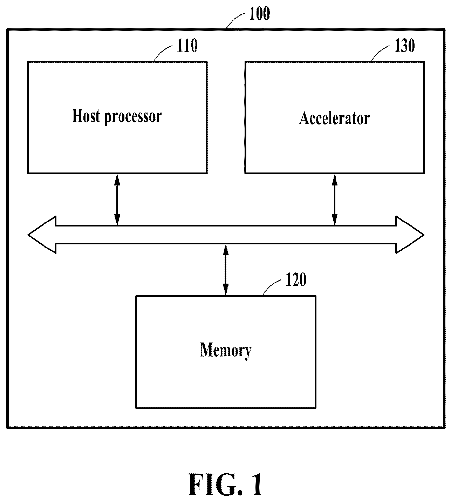

FIG. 1 is a diagram illustrating an electronic device according to an embodiment.

Referring to FIG. 1, an electronic device 100 may include a host processor 110, a memory 120, and an accelerator 130. The host processor 110, the memory 120, and the accelerator 130 may communicate with each other via a bus, a network-on-chip (NoC), a peripheral component interconnect express (PCIe), etc. In the example of FIG. 1, only components related to embodiments described herein are illustrated in the electronic device 100. Accordingly, the electronic device 100 may also include other general-purpose components in addition to the components illustrated in FIG. 1.

The host processor 110 may perform the overall function for controlling the electronic device 100. The host processor 110 may control the electronic device 100 overall by executing programs and/or instructions stored in the memory 120. The host processor 110 may be implemented as a central processing unit (CPU), a graphics processing unit (GPU), an application processor (AP), and the like, that are included in the electronic device 100, but embodiments are not limited thereto.

The memory 120 may be hardware for storing data processed in the electronic device 100 and data to be processed. In addition, the memory 120 may store an application, a driver, and the like to be driven by the electronic device 100. The memory 120 may include a volatile memory, such as dynamic random-access memory (DRAM), and/or a non-volatile memory.

The electronic device 100 may include the accelerator 130 for performing an operation. The accelerator 130 may process tasks that may be more efficiently processed by a separate exclusive processor (that is, the accelerator 130), rather than by the general-purpose host processor 110, due to the characteristics of the tasks. For example, a large language model (LLM) may be executed by the accelerator 130. Here, one or more processing elements (PEs) included in the accelerator 130 may be utilized. The accelerator 130 may correspond to, for example, a neural processing unit (NPU), a tensor processing unit (TPU), a digital signal processor (DSP), a GPU, a neural engine, and the like that perform an operation according to a neural network. The tasks that may be more efficiently processed by the accelerator 130 are not necessarily processed by the accelerator 130 but may be processed by the host processor 110.

The LLM is a deep learning-based model trained with extremely large-scale data and may be a type of neural network. The LLM may be specialized in understanding and generating text data. Since the LLM should include more parameters to improve performance, the size of the LLM may be extremely large. For example, the LLM may include parameters ranging from tens of billions to hundreds of billions. Since the size of the LLM is extremely large, hardware resources of the electronic device 100 executing the LLM may be important to execute the LLM. For example, a huge amount of memory resources may be used for an execution (e.g., inference) of the LLM. Accordingly, the inference speed of the LLM may be reduced, and various problems may occur because the LLM uses most of the memory resources of the electronic device 100.

Accordingly, it may be important to make the most of already loaded data. For example, even when the same size of key-value (KV) cache is used by efficiently managing a pair of a key and a value, there may be a need for a method to improve performance.

Hereinafter, an architecture of a typical LLM is described.

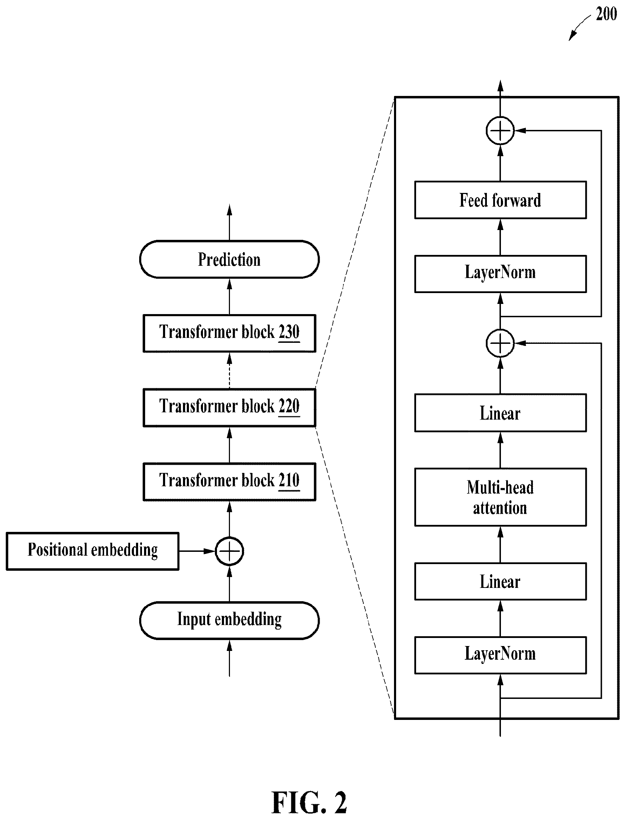

FIG. 2 is a diagram illustrating an architecture of an LLM, according to an embodiment.

Referring to FIG. 2, an LLM 200 may include an input layer (Input embedding), one or more transformer blocks and an output layer (Prediction). For example, the input embedding may include converting a token (e.g., word) into a vector form in a manner that the LLM 200 may understand. In order for a transformer block to process pieces of sequential information, position information (e.g., relative order information) of tokens may be required. In the LLM 200, positional embedding may be an operation of adding position information corresponding to a word (or token) to a vector. The LLM 200 may be an operation of training the input order of words through positional embedding.

According to an embodiment, the one or more transformer blocks in the LLM 200 may include a first transformer block 210, a second transformer block 220, and a third transformer block 230. The first transformer block 210 may receive, as input, tokens on which input embedding and positional embedding are performed. The first transformer block 210, the second transformer block 220, and the third transformer block 230 may be connected in series. For example, a transformer block may receive, as an input, an output of a previous transformer block.

According to an embodiment, each of the first transformer block 210, the second transformer block 220, and the third transformer block 230 may include a plurality of layers. For example, the second transformer block 220 may include, but is not limited to, a normalization layer (e.g., LayerNorm), a linear layer (e.g., Linear), a multi-head attention layer (e.g., Multi-head attention), and a feed-forward layer (e.g., Feed forward). The first transformer block 210 and the third transformer block 230 may include the same layers as the second transformer block 220. However, the disclosure is not limited, and as such, according to another embodiment, the first transformer block 210 and the third transformer block 230 may include one or more layers different from the second first transformer block 220.

The normalization layer may normalize an output of a previous layer and stabilize training. The linear layer may perform a linear transformation on an input and/or an output of the multi-head attention layer. For example, the linear layer may be used to reconstruct the output of the multi-head attention layer and adjust a dimension. The multi-head attention layer may identify a relationship between input tokens by using an attention mechanism. The feed-forward layer may perform an additional non-linear transformation after the attention mechanism is terminated.

The tokens input to the multi-head attention layer may each be converted into a query, key, and value. The query, key, and value may each be a vector.

The query may be information to evaluate the relationship between a current token and other tokens. For example, the query may determine which token the current token should focus on. The key may be a vector which represents information about the token that may be compared to the query of each token. For example, the key of the current token may be a vector used to calculate a similarity of how relevant the current token is to other tokens, compared to the query of other tokens. The value may be a vector indicating contextual information that each token has. The value may be used to generate the final attention value by being applied with an attention weight.

According to an embodiment, positional embedding (e.g., positional encoding) may be performed when converting a token into a query, key, and value. In order for the LLM 200 to understand the context of natural language based on a transformer, position information (e.g., order information) of input tokens may be needed. For example, in the sentences "the cat chases the mouse" and "the mouse chases the cat," when the positions of the "cat" and "mouse" are changed, the meanings may be completely different. Accordingly, positional embedding that reflects the position information may be performed to reflect the positions of the tokens. The LLM 200 may know the order of the tokens through positional embedding. Positional embedding may be extremely important because the attention mechanism may recognize the structure and positional pattern of a sentence and make a more accurate prediction.

According to an embodiment, positional embedding may have absolute positional encoding and relative positional encoding. Absolute positional encoding may be a method of adding the absolute position of a token in the input tokens to the position information. Relative positional encoding may be a method of adding the relative distance from each token to a surrounding token to the position information. For example, relative positional encoding may include a method of adding the position information by using a rotation transformation, such as rotary positional embedding (RoPE), and a method of adding the position information that is dynamically adjusted based on the context, such as contextual position encoding (CoPE).

However, the structure of a transformer block described above is only an example, and as such, the disclosure is not limited thereto. According to another example, the transformer block may include one or more layers in addition to the layers illustrated in FIG. 2, and one or more transformer blocks may be defined as upper transformer blocks. According to an embodiment, two or more consecutive transformer blocks illustrated in FIG. 2 may be defined as one upper transformer block.

According to an embodiment, the output layer (Prediction) in the LLM 200, as illustrated in FIG. 2, may generate the final prediction result based on an output of the last transformer block.

The performance of the LLM 200 may be associated with the number of transformer blocks. As the number of transformer blocks increases, the LLM 200 may perform deeper training. For example, as the number of transformer blocks increases, the LLM 200 may train more complex contextual information and train the correlation between tokens that are further apart in a long sentence. As the number of transformer blocks increases, the size of the LLM 200 may increase. More hardware resources of an electronic device may be required to execute the LLM 200 with an increased size. An increase in hardware resources may indicate an increase in cost.

Hereinafter, an attention score calculation among related art attention calculations is described.

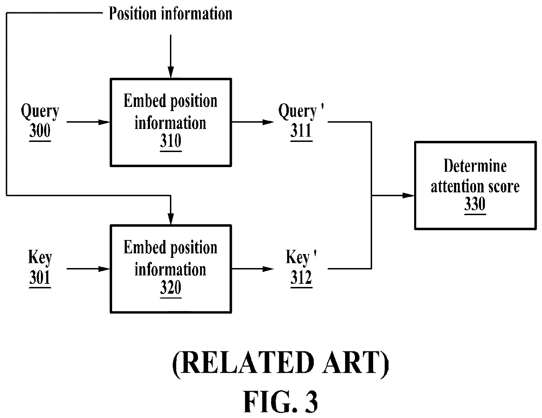

FIG. 3 is a diagram illustrating an attention calculation according to related art.

Tokens input to an LLM may each be converted into a query, key, and value. An electronic device may embed position information in the query, key, and value. For ease of description, the following description is based on a query 300 (e.g., Query) of a first token, which is a current token of the input tokens, and a key 301 (e.g., Key) of a second token, which is another token. The query 300 and the key 301 may be in a state before the position information is embedded. The first token may refer to a token that is currently a target of an attention operation. However, the following description may also be applied to the query 300 of the first token and a key of the first token.

In a block 310 and a block 320, the electronic device may embed the position information. For the sake of illustration, an input "I have a meeting today" may be input to the LLM. The electronic device may embed the position information (e.g., 0) for the query of "I", which is the first token, and may embed the position information (e.g., 1) for the key of "have", which is the second token.

The position information may be information indexed from 0 to the position where a corresponding token is placed in the input. However, this is only an example, and the position information may indicate the relative distance from each token to the surrounding token.

A query 311 (e.g., Query') of the first token may include the position information of the first token. A key 312 (e.g., Key') of the second token may include the position information of the second token.

In a block 330, the electronic device may determine an attention score based on the query 311 and the key 312 for an attention operation of the first token and the second token. The attention score may indicate the similarity or correlation between the first token and the second token. The attention score may be normalized through a normalization process (e.g., SoftMax function) and multiplied by a value of the second token, thereby determining an attention value.

In the related art method, since fixed position information of a token is used according to an input, the LLM may answer differently depending on how the sentence is structured. For example, in the case of "I have a meal today" and "I have um... a meal today," the sentences express the same content, but the attention score may be changed due to the added "um... " and the attention score may be changed due to the change in the relative positions between the tokens. Similarly, in the case of "I have a meal today" and "Today I have a meal," the sentences express the same content, but the attention score may be changed because the order of the tokens is changed.

That is, in the attention operation in which information exchange occurs between tokens, information exchange may occur differently according to a user input, which may cause the attention score to be distorted due to the change in positions rather than the meaning or importance of the word. For example, using in the related art method, the LLM has difficulty finding the correct answer when the content that a user desires to output is positioned in the middle of the input, and as such, the LLM may not operate in an efficient or accurate manner when only the position information of tokens is used according to the given input.

As a result, the LLM may not properly reflect the meaning of the actual sentence because the LLM relies too much on the position information according to the input sentence and may not properly reflect the various contexts that may occur in the transformed sentence. Hereinafter, a method of augmenting the position information is described to overcome the above-described problem.

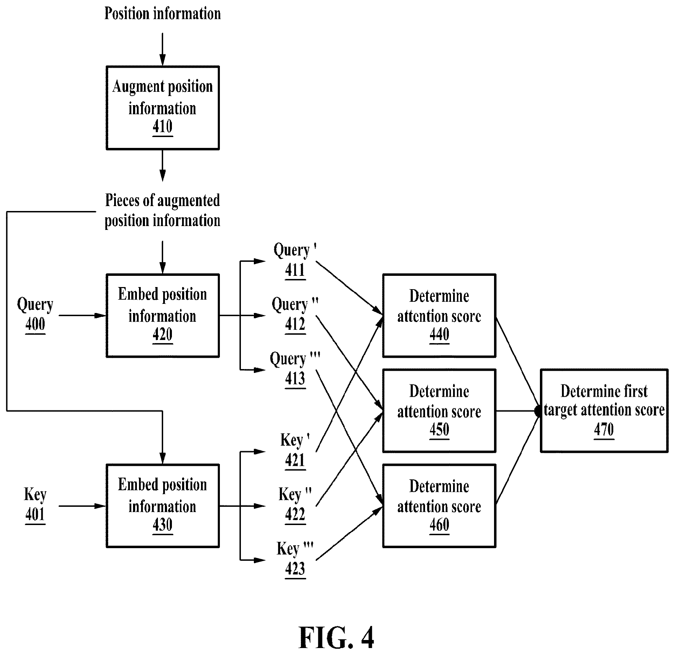

FIG. 4 is a diagram illustrating an attention calculation through augmentation of position information, according to an embodiment.

Referring to FIG. 4, tokens input to an LLM may each be converted into a query, key, and value. An electronic device may embed position information in the query, key, and value. For ease of description, the following description is based on a query 400 (e.g., Query) of a first token, which is a current token of the input tokens, and a key 401 (e.g., Key) of a second token, which is another token of the input tokens. The query 400 and the key 401 may be in a state before the position information is embedded. For example, the query 400 and the key 401 may be information before the position information is embedded. The first token may refer to a token that is currently a target of an attention operation. However, the following description may also be applied to the query 400 of the first token and a key of the first token.

In a block 410, the electronic device may augment the position information. For example, the electronic device may generate pieces of augmented position information based on the position information.

For example, the electronic device may generate pieces of augmented position information from the position information based on at least one of a plurality of first functions.

For example, the electronic device may generate each of the pieces of augmented position information based on at least one of the plurality of first functions by using the position information of a token as an input. The plurality of first functions may include, but is not limited to, various functions such as a logarithmic function (e.g., f(x) = log(x)), an exponential function (e.g., f(x) = exp(x)), a multiplication function (e.g., f(x) = 2x), a division function (e.g., f(x) = x/2), an addition function (e.g., f(x) = x + n, and here, n is a real number), a subtraction function (e.g., f(x) = x - n, and here, n is a real number), and a trigonometric function. The plurality of first functions may include various functions such as a combination of the above-described functions and a function (e.g., f(x) = 3log(x) + 0.1) predefined by a user.

According to an embodiment, augmented position information with increased position information may be generated by a first function. In an example case in which augmented position information with increased position information is generated by a first function, this may indicate that the attention relationship is additionally considered as if the given tokens are at a farther distance. According to an embodiment, augmented position information with decreased position information may be generated by a first function. In an example case in which augmented position information with decreased position information is generated by a first function, this may indicate that the attention relationship is additionally considered as if the given tokens are at a closer distance.

In an example case in which the position information of the first token is 20, and pieces of augmented position information (e.g., 20, 10, and 5) may each be generated by at least one (e.g., f(x) = x, f(x) = x/2, and f(x) = x/4) of the plurality of first functions. In an example case in which the position information of the second token is 16, pieces of augmented position information (e.g., 16, 8, and 4) may each be generated by at least one (e.g., f(x) = x, f(x) = x/2, and f(x) = x/4) of the plurality of first functions.

In a block 420 and a block 430, the electronic device may embed the position information in the query 400 and the key 401. The augmented position information that is augmented based on the at least one of the plurality of first functions may be embedded. The positional embedding may have absolute positional encoding and relative positional encoding.

In the block 420, the electronic device may generate a plurality of queries for the first token based on the pieces of augmented position information. For example, the electronic device may generate a query 411 (e.g., Query') embedded with a piece of position information 20, a query 412 (e.g., Query") embedded with a piece of position information 10, and a query 413 (e.g., Query‴) embedded with a piece of position information 5.

In the block 430, the electronic device may generate a plurality of keys for the second token based on the pieces of augmented position information. For example, the electronic device may generate a key 421 (e.g., Key') embedded with a piece of position information 16, a key 422 (e.g., Key") embedded with a piece of position information 8, and a key 423 (e.g., Key‴) embedded with a piece of position information 4.

In a block 440, a block 450, and a block 460, the electronic device may determine an attention score. The electronic device may determine a plurality of first attention scores based on the plurality of queries and the plurality of keys.

The electronic device may determine a first attention score based on, among the plurality of queries and the plurality of keys, a pair of a query and a key augmented by the same first function. For example, in the block 440, the electronic device may determine the first attention score based on a pair of the query 411 (e.g., Query') and the key 421 (e.g., Key'), which includes the position information augmented by the same first function (e.g., f(x) = x). For example, in the block 450, the electronic device may determine the first attention score based on a pair of the query 412 (e.g., Query") and the key 422 (e.g., Key"), which includes the position information augmented by the same first function (e.g., f(x) = x/2). For example, in the block 460, the electronic device may determine the first attention score based on a pair of the query 413 (e.g., Query‴) and the key 423 (e.g., Key‴), which includes the position information augmented by the same first function (e.g., f(x) = x/4). The electronic device may determine a first attention score based on, among the plurality of queries and the plurality of keys, a pair of a query and a key augmented by the same first function and/or by different first functions. For example, in the block 440, the electronic device may determine the first attention score based on a pair of the query 411 (e.g., Query') and the key 421 (e.g., Key'), which includes the position information augmented by the same first function (e.g., f(x) = x). For example, in the block 450, the electronic device may determine the first attention score based on a pair of the query 412 (e.g., Query") and the key 422 (e.g., Key"), which includes the position information augmented by different first functions (e.g., the position information for Query" is augmented using f(x) = x/2 and the position information of Key" is augmented using f(x) = x). For example, in the block 460, the electronic device may determine the first attention score based on a pair of the query 413 (e.g., Query‴) and the key 423 (e.g., Key‴), which includes the position information augmented by different first function (e.g., f(x) = x/4 and f(x) = x/2; or f(x) = x/4 and f(x) = x). The first attention score may be determined based on an operation that determines the similarity between a query and a key. For example, the first attention score may be determined based on an inner product operation between a query and a key.

In a block 470, the electronic device may determine a first target attention score. For example, the electronic device may determine the first target attention score based on the plurality of first attention scores.

The electronic device may determine the first target attention score based on one of a plurality of second functions that determines the first target attention score from the plurality of first attention scores.

According to an embodiment, the plurality of second functions may be functions that select a representative value from the plurality of first attention scores. For example, the plurality of second functions may include a function that determines a median value from the plurality of first attention scores. For example, the plurality of second functions may include a function that determines a mode value from the plurality of first attention scores. However, this is an example, and the present disclosure is not limited thereto, and various functions that determine a representative value may be applied.

According to an embodiment, the plurality of second functions may be functions that generate a representative value based on the plurality of first attention scores. The plurality of second functions may include a function that determines an average value from the plurality of first attention scores. The plurality of second functions may include a function that determines a weighted average from the plurality of first attention scores. In an example case in which the weighted average is determined based on the plurality of first attention scores, the weight of the first attention score generated from position information that is not augmented (e.g., position information augmented by the first function having f(x) = x) may be determined to be higher than the weight of other first attention scores.

The electronic device may determine whether the first target attention score has an attention score that is less than or equal to a threshold value (e.g., a first threshold attention score threshold value). When the first target attention score has an attention score that is less than or equal to the threshold value, the electronic device may remove a corresponding key and a value of the second token from a memory (e.g., a KV cache). The threshold value may be set by a user or determined experimentally.

The fact that the first target attention score has an attention score that is less than or equal to the threshold value may indicate that the second token has a low correlation with the first token positioned at various positions according to the augmentation of the position information. The fact that the second target attention score has an attention score exceeding the threshold value may indicate that the second token has a high correlation with the first token positioned at various positions according to the augmentation of the position information. The consumption of memory resources may be minimized by storing, in the KV cache, only a pair of the key and the value of the second token having a high correlation with the first token positioned at various positions.

The LLM may include a plurality of transformer blocks, and the transformer blocks may include a multi-head attention layer. The multi-head attention layer may perform, on one input, a plurality of attention operations in parallel. Accordingly, the generating of the pieces of augmented position information, the generating of the plurality of queries, the determining of the plurality of first attention scores, and the determining of the first target attention score described above may be performed for each head of the multi-head attention layer.

The LLM may perform inference on an input based on the first target attention score. According to an embodiment, by augmenting position information given at the time of the input in various ways, the LLM may understand the multi-layered meanings included in the input sentences and may understand various contextual meanings by reducing excessive dependence on the input provided by a user.

Hereinafter, a method of minimizing resource consumption is described by efficiently using pre-loaded data (e.g., a key and a value of a token).

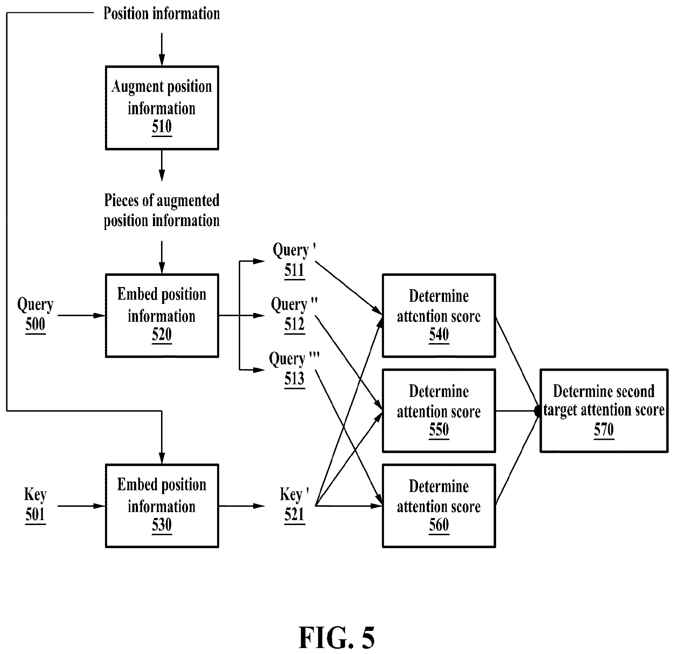

FIG. 5 is a diagram illustrating deletion of a key-value (KV) cache using augmentation of position information, according to an embodiment.

The KV cache may store a key and a value of a previous token to efficiently perform an attention operation of an LLM. Since the KV cache stores a pair of the key and the value of the previous token, the key and value of the previous token may not need to be recalculated during an attention operation of a current cache, and as such, the efficiency may be improved. However, as a length of an input sequence increases, the pair of the key and the value of the previous token that needs to be stored in the KV cache may increase exponentially. In an example case in which an LLM having 3 billion parameters operates with a sequence length of 1,024 and a batch size of 128, 180 gigabytes (GB) of memory may be required. Hereinafter, a method of efficiently managing pre-loaded data (e.g., a pair of a key and a value of a previous token) is described.

According to an embodiment, tokens input to the LLM may each be converted into a query, key, and value. The electronic device may embed position information in the query, key, and value. For ease of description, the following description is based on a query 500 (e.g., Query) of a first token, which is a current token of the input tokens, and a key 501 (e.g., Key) of a second token, which is another token of the input tokens. The query 500 and the key 501 may be in a state before the position information is embedded. For example, the query 500 and the key 501 may be information before the position information is embedded. The first token may refer to a token that is currently a target of an attention operation. However, the following description may also be applied to the query 500 of the first token and a key of the first token.

In a block 510, the electronic device may augment the position information.

The electronic device may generate pieces of augmented position information from the position information based on at least one of a plurality of first functions. The method of generating the pieces of augmented position is described with reference to FIG. 4, so a detailed description thereof is omitted.

In a block 520 and a block 530, the electronic device may embed the position information in the query 500 and the key 501.

In the block 520, the electronic device may generate a plurality of queries for the first token based on the pieces of augmented position information. For example, the electronic device may generate a query 511 (e.g., Query') embedded with a piece of position information 20, a query 512 (e.g., Query") embedded with a piece of position information 10, and a query 513 (e.g., Query‴) embedded with a piece of position information 5.

In the block 530, the electronic device may generate a key for the second token based on the position information. The electronic device may generate a key 521 (e.g., Key') by embedding the position information of the second token. The key 521 may include non-augmented position information (e.g., position information of the second token in an input) of the second token.

In a block 540, a block 550, and a block 560, the electronic device may determine a plurality of second attention scores based on the plurality of queries and the key 521 of the second token. The electronic device may determine a second attention score between each of the plurality of queries and the key 521. For example, in the block 540, the electronic device may determine a second attention score between the query 511 (e.g., Query') and the key 521 (e.g., Key'). For example, in the block 550, the electronic device may determine a second attention score between the query (e.g., Query") 512 and the key 521 (e.g., Key'). For example, in the block 560, the electronic device may determine a second attention score between the query (e.g., Query‴) 513 and the key 521 (e.g., Key').

In a block 570, the electronic device may determine a second target attention score. The electronic device may determine the second target attention score based on the plurality of second attention scores. The method of determining the second target attention score may be applied in the same manner as the method of determining the first target attention score described above with reference to FIG. 4, so a detailed description thereof is omitted.

The electronic device may determine whether the second target attention score has an attention score that is less than or equal to a threshold value. When the second target attention score has an attention score that is less than or equal to the threshold value, the electronic device may remove the key 501 and a value of the second token from a memory (e.g., a KV cache). The threshold value may be set by a user or determined experimentally.

The fact that the second target attention score has an attention score that is less than or equal to the threshold value may indicate that the second token has a low correlation with the first token positioned at various positions according to the augmentation of the position information. The fact that the second target attention score has an attention score exceeding the threshold value may indicate that the second token has a high correlation with the first token positioned at various positions according to the augmentation of the position information. The consumption of memory resources may be minimized by storing, in the KV cache, only a pair of the key and the value of the second token having a high correlation with the first token positioned at various positions.

According to an embodiment, the LLM may include a plurality of transformer blocks, and the transformer blocks may include a multi-head attention layer. The multi-head attention layer may perform, on one input, a plurality of attention operations in parallel. Accordingly, the generating of the pieces of augmented position information, the generating of the plurality of queries, the determining of the plurality of second attention scores, and the determining of the second target attention scores described above may be performed for each head of the multi-head attention layer.

Hereinafter, the LLM that performs the augmentation of the position information described above with reference to FIGS. 4 and 5 is described.

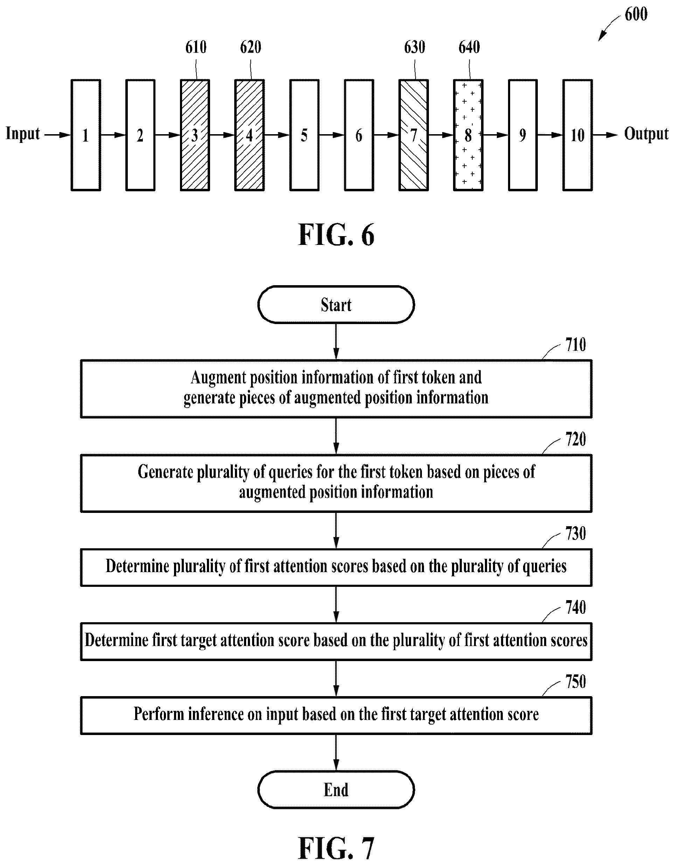

FIG. 6 is a diagram illustrating an LLM that performs augmentation on position information in some transformer blocks, according to an embodiment.

Referring to FIG. 6, an LLM 600 may include a plurality of transformer blocks according to an embodiment. For example, the LLM 600 may include 10 transformer blocks, but the disclosure is not limited thereto, and as such, according to another embodiment, the number of transformer blocks may be different than 10.

According to an embodiment, an electronic device may input tokens to the LLM 600 including the plurality of transformer blocks. The LLM 600 may generate an output corresponding to the tokens through inference by using the tokens as inputs.

According to an embodiment, at least one of the plurality of transformer blocks may perform the augmentation of the position information described above with reference to FIGS. 4 and 5 in a multi-head attention layer.

According to an embodiment, at least one of the plurality of transformer blocks may generate pieces of augmented position information by augmenting position information of the tokens. According to an embodiment, at least one of the plurality of transformer blocks may generate a plurality of queries and a plurality of keys for the tokens based on the pieces of augmented position information. According to an embodiment, at least one of the plurality of transformer blocks may perform inference corresponding to the tokens based on a target attention score determined from the plurality of queries and the plurality of keys. The operation of at least one of the plurality of transformer blocks is described above with reference to FIGS. 4 and 5, so a detailed description thereof is omitted.

For example, a transformer block 610, a transformer block 620, a transformer block 630, and a transformer block 640 may generate the pieces of augmented position information by augmenting the position information of the tokens, generate the plurality of queries and the plurality of keys for the tokens based on the pieces of augmented position information, and perform inference corresponding to the tokens based on the target attention score determined from the plurality of queries and the plurality of keys.

According to an embodiment, the method of augmenting the position information may vary for each transformer block. For example, the transformer block 610 and the transformer 620 may augment the position information with a same first function. For example, the first function may be an exponential function. For example, the transformer block 610, the transformer block 630, and the transformer block 640 may augment the position information with different functions. According to an embodiment, the transformer block 610 may augment the position information with a first function, the transformer block 630 may augment the position information with a second function, and the transformer block 640 may augment the position information with a third function. The first function, the second function and the third function may be different from each other. For example, the transformer block 610 may augment the position information with an exponential function, the transformer block 630 may augment the position information with a logarithmic function, and the transformer block 640 may augment the position information with a multiplication function. According to an embodiment, positional embedding may be performed again for each transformer block to augment the position information based on different functions.

FIG. 7 is a flowchart illustrating an operating method of an electronic device, according to an embodiment.

According to one or more embodiments illustrated in FIG. 7, operations may be performed sequentially but not necessarily. For example, the order of the operations may be changed and at least two of the operations may be performed in parallel. The operations shown in FIG. 7 may be performed by at least one component of an electronic device. For example, when instructions included in a memory are individually and/or collectively executed by at least one processor, the electronic device may perform the following operations. The at least one processor may include at least one of a host processor and an accelerator.

The operation method may include obtaining input for the LLM. The LLM may perform inferences based on the following operations. For example, the electronic device may obtain text as input, and by inputting the text into the LLM, electronic device may obtain inferences based on the following operations.

In operation 710, the operating method may include augmenting position information of a first token input in an LLM and generating pieces of augmented position information. For example, the electronic device may augment position information of a first token input into an LLM and generate pieces of augmented position information for the first token.

In operation 720, the operating method may include generating a plurality of queries for the first token based on the pieces of augmented position information. For example, the electronic device may generate a plurality of queries for the first token based on the pieces of augmented position information.

In operation 730, the operating method may include obtaining a plurality of first attention scores based on the plurality of queries. For example, the electronic device may obtain or determine a plurality of first attention scores based on the plurality of queries.

In operation 740, the operating method may include obtaining a first target attention score based on the plurality of first attention scores. For example, the electronic device may obtain or determine a first target attention score based on the plurality of first attention scores.

In operation 750, the operating method may include performing inference on the input based on the first target attention score. For example, the electronic device may perform inference on the input based on the first target attention score.

The operating method may include displaying results of the inference. The electronic device may display the results of the inference. The electronic device may display the results of the inference on a display module. The electronic device may display the results of the inference obtained based on the input.

The detailed description of operations 710 to 750 is described above with reference to FIGS. 1 to 6, so a detailed description thereof is omitted.

According to an embodiment of the present disclosure, by augmenting position information of an input in various ways, the LLM may be enabled to understand the multi-layered meanings included in the input. According to an embodiment of the present disclosure, by allowing the LLM to understand the multi-layered meanings included in the input, the LLM may correctly interpret the meaning even when the order of input tokens is changed. According to an embodiment of the present disclosure, by enabling the LLM to understand the multi-layered meanings included in the input, the inference performance of the LLM may be improved. According to an embodiment of the present disclosure, by allowing the LLM to understand the multi-layered meanings included in the input, a smaller LLM may achieve high inference performance, thereby allowing the size of the LLM to be compressed.

The embodiments described herein may be implemented using a hardware component, a software component, and/or a combination thereof. For example, components such, as "blocks", "modules", "units", etc., may be implemented using a hardware component, a software component, and/or a combination thereof. For example, a processing device or the hardware component may be implemented using one or more general-purpose or special-purpose computers, such as, for example, a processor, a controller and an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations and other embodiments are also within the scope of the following claims.

## Claims

1. An operating method of an electronic device, the operating method comprising:
generating a plurality of pieces of augmented position information for a first token input to a language model 'LM' by augmenting position information of the first token;
generating a plurality of queries for the first token based on the plurality of pieces of augmented position information;
determining a plurality of first attention scores based on the plurality of queries;
determining a first target attention score based on the plurality of first attention scores; and
performing inference on the input based on the first target attention score.

2. The operating method according to claim 1, wherein each piece of augmented position information from the plurality of pieces of augmented position information is generated based on at least one of a plurality of first functions configured to augment the position information of the first token.

3. The operating method according to claim 1 or 2, further comprising:
generating a plurality of keys for a second token input to the LM by augmenting position information of the second token,
wherein the second token is configured to perform an attention operation with the first token.

4. The operating method according to claim 3, wherein the determining of the plurality of first attention scores comprises determining a first attention score, among the plurality of first attention scores, based on a pair of a first query and a first key, among the plurality of queries and the plurality of keys, the first query and the first key comprising position information that is augmented by a same first function.

5. The operating method according to any one of the previous claims, wherein the determining of the first target attention score comprises determining the first target attention score based on one of a plurality of second functions that determines the first target attention score from the plurality of first attention scores.

6. The operating method according to any one of the previous claims, further comprising:
determining a plurality of second attention scores based on the plurality of queries and a key of a second token; and
determining a second target attention score based on the plurality of second attention scores.

7. The operating method according to claim 6, wherein the determining of the second target attention score comprises determining the second target attention score based on one of a plurality of third functions that determines the second target attention score from the plurality of second attention scores.

8. The operating method according to claim 6 or 7, further comprising:
removing, from a memory, a value and the key of the second token based on the second target attention score having an attention score that is less than or equal to a threshold value.

9. The operating method according to any one of the previous claims, wherein the LM comprises a multi-head attention layer,
wherein the generating of the plurality of pieces of augmented position information for the first token, the generating of the plurality of queries, the determining of the plurality of first attention scores, and the determining of the first target attention score are performed for each head of the multi-head attention layer.

10. The operating method according to any one of the previous claims, further comprising:
inputting tokens to the LM, wherein the LM comprises a plurality of transformer blocks and wherein the tokens include the first token; and
generating, by the LM, an output corresponding to the tokens through inference by using the tokens as inputs,
wherein generating the output includes at least one of the plurality of transformer blocks performing the steps of:
generating a plurality of pieces of augmented position information by augmenting position information of the tokens,
generating a plurality of queries and a plurality of keys for the tokens based on the plurality of pieces of augmented position information, and
performing inference corresponding to the tokens based on a target attention score determined from the plurality of queries and the plurality of keys.

11. The operating method of claim 10, wherein the plurality of transformer blocks comprises a first transformer block and a second transformer block, and
wherein the first transformer block and the second transformer block are configured to augment the position information by different functions.

12. An electronic device comprising:
a memory configured to store instructions; and
at least one processor configured to execute the instructions,
wherein, the instructions, when individually or collectively executed by the at least one processor, cause the electronic device to perform the method according to any one of the previous claims.

13. A non-transitory computer-readable storage medium storing instructions that, when executed by a processor, cause the processor to perform the method according to any of the claims 1 - 11.
